# EUROPÄISCHE PATENTSCHRIFT

(11) **EP 1 985 976 B1**
(45) Veröffentlichungstag und Bekanntmachung des Hinweises auf die Patenterteilung: **26.11.2014**
(21) Anmeldenummer: 08003227.9
(22) Anmeldetag: 22.02.2008
(51) Int. Cl.: G01F 15/14, G01F 15/18

(54) **Messvorrichtung mit Gehäusestutzen**
Measuring device with connecting pieces
Dispositif de mesure avec des raccords

(30) Priorität: 24.04.2007 DE 102007019627
(43) Veröffentlichungstag der Anmeldung: 29.10.2008
(73) Patentinhaber: Diehl Metering GmbH, 91522 Ansbach (DE)
(72) Erfinder: Oeder, Ottmar, 91567 Herrieden (DE); Zellner, Claus, 91522 Ansbach (DE)
(74) Vertreter: Blaumeier, Jörg

(56) Entgegenhaltungen:
- DE-U1- 20 305 063
- DE-U1- 29 920 282
- US-A1- 2006 076 059

## Beschreibung

Die Erfindung betrifft eine Messvorrichtung zum Einsetzen in eine Rohrleitung, insbesondere Durchfluss-, Wärme- oder Energiezähler, umfassend ein insbesondere aus Kunststoff bestehendes Gehäuse mit zwei dem Einlass und Auslass des zu vermessenden Mediums dienenden Gehäusestutzen.

Derartige Messvorrichtungen sind beispielsweise in Form von Wasserzählern oder Wärmezählern hinlänglich bekannt. Neuerdings, siehe beispielsweise DE 299 20 282 U1, werden die Vorrichtungs- oder Zählergehäuse auch aus Kunststoff in einem Spritzgussverfahren hergestellt. Diese Gehäuse sind in der Herstellung einfach und günstig, ferner lässt sich beachtlich Gewicht reduzieren. Auch lassen sie sich ohne weiteres in Rohrleitungen setzen. Probleme können jedoch dann entstehen, wenn die beiden über den Vorrichtung zu verbindenden Rohrleitungsenden nicht genau miteinander fluchten, sondern seitlich leicht versetzt zueinander liegen. Zu diesem Zweck ist es aus DE 299 20 282 U1 bekannt, Ausgleichsstutzen in die Gehäusestutzen zu setzen. Die Gehäusestutzen beziehungsweise deren Stutzenöffnungen besitzen dabei einen unrunden, insbesondere polygonalen, beispielsweise sechseckigen Querschnitt. Einen entsprechenden Querschnitt besitzen die Anschlussstutzen, so dass diese nicht drehbar in den Gehäusestutzen aufgenommen sind. Die Anschlussstutzen können zum Ausgleich etwaiger Längentoleranzen lediglich axial verschoben werden. In einer Ausführungsform ist es auch bekannt, einen Anschlussstutzen verkippbar im Gehäuse aufzunehmen. Zur Abdichtung zwischen Anschlussstutzen und Gehäusestutzen ist eine O-Ring-Dichtung vorgesehen, die am inneren Ende eines jeden Anschlussstutzens aufgeschoben ist und mit dem Anschlussstutzen axial verschoben wird.

Wie beschrieben ist jeder Anschlussstutzen im Rahmen der Montage, nachdem auf ihn die O-Ring-Dichtung aufgeschoben wurde, in den jeweiligen Gehäusestutzen einzusetzen, in diesem sitzt er mehr oder weniger lose, lediglich etwas über die O-Ring-Dichtung fixiert. Dieser lose Sitz ist nachteilig, im Rahmen der Montage kann der Anschlussstutzen aus seinem gehäuseseitigen Sitz rutschen und herausfallen, auch kann die Axialbewegbarkeit dazu führen, dass sich bei einer Bewegung des losen Anschlussstutzens die Dichtung ablöst.

Der Erfindung liegt damit das Problem zugrunde, eine Messvorrichtung anzugeben, die in ihrer Handhabung und Montage gegenüber bekannten Messvorrichtungen vereinfacht ist.

Zur Lösung dieses Problems ist bei einer Messvorrichtung der eingangs genannten Art erfindungsgemäß vorgesehen, dass ein Gehäusestutzen und der jeweilige Anschlussstutzen über eine Schnapp-Rast-Verbindung unverlierbar miteinander verbunden oder verbindbar sind.

Bei der erfindungsgemäßen Messvorrichtung, beispielsweise einem Durchflusszähler, ist eine relative Bewegbarkeit zwischen Gehäusestutzen und Anschlussstutzen derart gegeben, dass beide relativ zueinander verschwenkt und axial bewegt werden können, was es ermöglicht, axiale Toleranzen sowie Fluchtungsfehler der zu verbindenden Rohrleitungen ausgleichen zu können. Trotz dieser gegebenen Beweglichkeit mit mehreren Freiheitsgraden besteht bei der erfindungsgemäßen Messvorrichtung die Möglichkeit, einen Anschlussstutzen mit dem entsprechenden Gehäusestutzen unverlierbar zu verbinden, was über eine erfindungsgemäß vorgesehene Schnapp-Rast-Verbindung realisiert wird. Am Gehäusestutzen und am Anschlussstutzen sind entsprechende Rastelemente vorgesehen, die hierfür miteinander in Eingriff gebracht werden können. Im Rahmen der Montage ist es also lediglich erforderlich, zunächst - sofern ein separates Dichtelement vorgesehen ist, und kein an einem der Bauteile angeformtes Dichtelement verwendet wird, worauf nachfolgend noch eingegangen wird - das Dichtelement am Gehäuse- oder Anschlussstutzen anzuordnen, und anschließend den Anschlussstutzen am Gehäusestutzen aufzuschnappen. Hierüber wird automatisch zum einen die abgedichtete Verbindung zwischen Anschlussstutzen und Gehäusestutzen realisiert, zum anderen die Montagebereitschaft hergestellt und gleichzeitig sichergestellt, dass beide sich nicht unbeabsichtigt voneinander lösen können. Selbstverständlich besteht die Möglichkeit, mit geeignetem Werkzeug die Stutzentrennung vorzunehmen, diese ist dann aber beabsichtigt und nicht unbeabsichtigt, wie dies bisher im Stand der Technik möglich ist. Die Schnapp-Rast-Verbindung lässt neben einer sicheren Fixierung auch eine sehr einfache Stutzenverbindung zu, da der Anschlussstutzen lediglich hinreichend fest gegen den Gehäusestutzen zu drücken ist, bis unter entsprechender Deformation die Rastelemente miteinander verrasten.

Mit der erfindungsgemäßen Messvorrichtung ist eine spannungsfreie und einfache Montage insbesondere eines aus Kunststoff gefertigten Zählergehäuses in einer Rohrleitung möglich. Die Verkippbarkeit der beiden Anschlussstutzen relativ zu den Gehäusestutzen, die an den gegenüberliegenden Enden des Gehäuses angeordnet sind, ermöglicht eine quasi parallelogrammartige Verstellbarkeit der Anschlussstutzen, so dass beachtliche seitliche Versätze der zu verbindenden Rohrleitungsenden überbrückt werden können. Hierbei läuft der Monteur keine Gefahr, einen oder beide Anschlussstutzen zu verlieren, nachdem diese über die Schnapp-Rast-Verbindung sicher fixiert sind. Auch besteht keine Gefahr, eine Dichtung zu verlieren oder dass sich eine solche löst.

In einer konkreten Erfindungsausgestaltung der Schnapp-Rast-Verbindung kann am Anschlussstutzen oder am Gehäusestutzen ein an einer Seite axial von einer Rastschulter begrenzter Ringraum vorgesehen sein, in den in der Montagestellung ein Rastabschnitt des Gehäusestutzens oder des Anschlussstutzens, die Rastschulter hintergreifend, eingeschnappt ist. Die Schnapp-Rast-Verbindung zeichnet sich also durch zwei an den zu verbindenden Stutzen vorgesehene Rastelemente aus, nämlich zum einen den Ringraum mit axial begrenzender Rastschulter am einen Stutzen, zum anderen den Rastabschnitt am anderen Stutzen, der in den Ringraum eingeschnappt wird und dabei die Rastschulter hintergreift. Je nach Ausgestaltung kann der Ringraum mit der Rastschulter am Anschlussstutzen und der Rastabschnitt am Gehäusestutzen vorgesehen sein, oder umgekehrt. Das Funktionsprinzip ist stets dasselbe.

Für eine einfache Erwirkung der Rastverbindung weist zweckmäßigerweise die Rastschulter und der Rastabschnitt jeweils eine Einführschräge auf, welche Schrägen beim Verbinden aufeinander abgleiten. Um die Verbindung einfach zu bewerkstelligen, sind der Anschlussstutzen beziehungsweise das Zählergehäuse insgesamt bevorzugt aus Kunststoff ausgeführt, so dass eine gewisse materialspezifische Elastizität von Haus aus gegeben ist. Auch kann natürlich der Anschlussstutzen aus Kunststoff gefertigt sein. Denkbar können zur Ermöglichung einer gewissen Einfederbarkeit auch ein oder mehrere Längsschlitze oder dergleichen beispielsweise im Bereich der Rastschulter vorgesehen werden, so dass diese etwas leichter nach außen federn kann beziehungsweise nach Einführen des Rastabschnitts in den Ringraum wieder zurückschnappen kann.

Neben der unterschiedlichen Realisierung hinsichtlich der Anordnung des Ringraums nebst Rastschulter und des Rastabschnitts am Gehäusestutzen oder am Anschlussstutzen besteht ferner die Möglichkeit, entweder den Anschlussstutzen auf den Gehäusestutzen aufzuschnappen, das heißt, dass bei dieser Ausgestaltung der Anschlussstutzen den Gehäusestutzen übergreift, oder in umgekehrter Ausgestaltung den Anschlussstutzen in den Gehäusestutzen einzuführen und dort zu verrasten. Je nachdem welcher Stutzen nun den anderen übergreift, sind diese selbstverständlich entsprechend zu dimensionieren, wobei unabhängig von der konkreten Ausgestaltung sichergestellt sein sollte, dass die Stutzeninnendurchmesser, durch die das zu messende Fluid strömt, stets gleich sind, so dass sich im Verbindungsbereich der beiden Stutzen keine strömungstechnisch nachteilig auswirkende Stufe oder dergleichen ergibt.

Wie beschrieben ist bei der erfindungsgemäßen Messvorrichtung der Gehäusestutzen relativ zum Anschlussstutzen sowohl um einen gewissen Winkel in alle Richtungen schwenkbar wie auch um ein gewisses Stück, im Bereich mehrerer Millimeter axial verschiebbar. Um eine optimale Dichtung zu erwirken, ist vorteilhafterweise das Dichtelement ein den Gehäusestutzen zum Anschlussstutzen sowohl axial als auch radial dichtendes Dichtelement, das bevorzugt in der maximalen axialen Auszugsstellung des Auszugsstutzen relativ zum Gehäusestutzen auch etwas vorgespannt ist. Durch die kombinierte axiale und radiale Dichtung wird zum einen sichergestellt, dass eine vollständige Abdichtung gewährleistet ist, wobei weiterhin hierüber auch sichergestellt werden kann, dass auch in jeder einnehmbaren Schwenk- und Axialstellung die radiale und axiale Dichtung gegeben ist. Die bereits beschriebene Vorspannung des Dichtelements stellt sicher, dass auch in der maximalen axialen Auszugsstellung eine hinreichend gespannte axiale Dichtanlage zwischen Dichtelement und Anschluss- und Gehäusestutzen gegeben ist.

Zweckmäßigerweise ist am Anschlussstutzen oder am Gehäusestutzen ein vorzugsweise dem Ringraum direkt folgender Aufnahmeraum für das Dichtelement, das als länglicher zylindrischer Dichtring ausgeführt ist, vorgesehen, wobei sich das Dichtelement axial erstreckt und in das zur radialen Abdichtung ein Dichtabschnitt des Gehäusestutzens oder des Anschlussstutzens eingreift und gegen das der Gehäusestutzen und der Anschlussstutzen zur axialen Abdichtung mit einer Anlageschulter axial anliegen. Durch den Aufnahmeraum, in dem das Dichtelement angeordnet ist, kann sichergestellt werden, dass dieses so dimensioniert werden kann, dass es nicht strömungsbeeinflussend in den Strömungskanal hineinreicht. Über den Eingriff des Dichtabschnitts des Gehäusestutzens oder des Anschlussstutzens, je nach Ausgestaltung, in das Innere des Dichtelements wird zum einen eine größerflächige Dichtverbindung in axialer Richtung gesehen realisiert, zum anderen kann bei Verkippung des einen Stutzens relativ zum anderen, wobei natürlich auch der zylindrische Dichtabschnitt verkippt wird, eine starke Flächenpressung des Dichtelements im Bereich des Übergangs zum inneren Dichtabschnitts wie auch in der Anlage zum Aufnahmeraum beziehungsweise der zylindrischen Rauminnenwand realisiert werden. Die axiale Abdichtung ist über die entsprechenden Anlageschultern gegen die die Stirnkanten des ring- beziehungsweise zylindrischen Dichtelements an den Stutzen anliegen, gewährleistet.

Wie bereits beschrieben sind die Anschlussstutzen wie auch das Zählergehäuse bevorzugt aus Kunststoff hergestellt. Hierüber kann bereits eine hinreichende Elastizität aufgrund der materialen Eigenschaften des Kunststoffs erreicht werden, die die Schnapp-Rast-Verbindung ohne weiteres realisieren lässt, ohne dass spezielle Vorkehrungen zur Ermöglichung einer gewissen Federbarkeit wie Nuten oder Einschnitte oder dergleichen vorgesehen sind, wenngleich diese natürlich ebenfalls ausgebildet werden können. Denkbar ist aber auch, einen Anschlussstutzen aus einem weichen Metall wie Messing auszuführen, wobei auch in diesem Fall selbstverständlich über entsprechende Längsnuten oder dergleichen federnde Rastabschnitte realisiert werden können.

Bei einer Ausführungsform eines Anschlussstutzen aus Kunststoff besteht die besonders zweckmäßige Weiterbildung, an dem Anschlussstutzen das ebenfalls aus Kunststoff bestehende Dichtelement unmittelbar anzuspritzen oder anzuformen. Dies ist im Rahmen eines 2-Komponenten-Spritzverfahrens ohne weiteres möglich. Während also der Anschlussstutzen aus einem harten Kunststoffmaterial hergestellt wird, wird das Dichtelement aus einem deutlich weicheren Kunststoffmaterial unmittelbar am Anschlussstutzen angeformt. Es ist damit zwangsläufig unverlierbar mit dem Anschlussstutzen verbunden. Auch ein Anspritzen des Dichtelements an den Gehäusestutzen des Kunststoffzählergehäuses ist möglich.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: zeigt in Form einer Prinzipdarstellung eine erfindungsgemäße Messvorrichtung in Form eines Zählers mit daran angesetzten Anschlussstutzen im Längsschnitt,
- Fig. 2: eine vergrößerte Schnittansicht des Verbindungsbereichs zwischen Anschlussstutzen und Gehäusestutzen, und
- Fig. 3: eine Ansicht entsprechend Fig. 2 mit einem anderen Dichtelement.

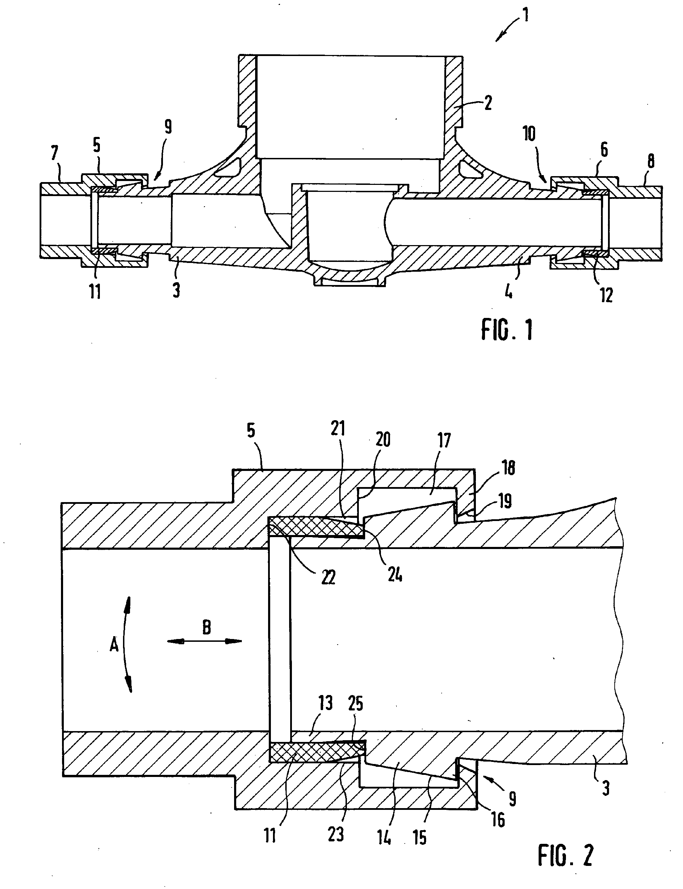

Fig. 1 zeigt in Form einer Prinzipdarstellung eine erfindungsgemäße Messvorrichtung 1 in Form eines Zählers, umfassend ein aus Kunststoff gefertigtes Zählergehäuse 2 mit zwei Stutzen 3, 4, die dem Einlass beziehungsweise Auslass eines zu vermessenden Fluids, beispielsweise Wasser, in den Zähler und zum dortigen nicht näher gezeigten Messabschnitt ermöglichen. Auf jeden der Gehäusestutzen 3, 4 ist ein Anschlussstutzen 5, 6 zum Verbinden mit einer hier nicht näher gezeigten Rohrleitung gezeigt. Jeder Anschlussstutzen 5, 6 weist einen Verbindungsabschnitt 7, 8 mit einem hier nicht näher gezeigten Außengewinde auf, auf das eine Verbindungsmutter aufgeschraubt werden kann. Zur Befestigung des Anschlussstutzen 5, 6 mit dem jeweiligen Gewindestutzen 3, 4 ist eine Schnapp-Rast-Verbindung 9, 10 zwischen den beiden Stutzen realisiert, die nachfolgend noch im Detail beschrieben wird. Die beiden Stutzen sind über ein Dichtelement 11, 12, das die beiden Stutzen relativ zueinander sowohl radial als auch axial abdichtet, fluiddicht verbunden.

Fig. 2 zeigt eine vergrößerte Darstellung des Gehäusestutzens 3 und des Anschlussstutzen 5 nebst der Schnapp-Rast-Verbindung 9, welche Elemente nachfolgend näher beschrieben werden. Die gleichen Ausführungen gelten selbstverständlich bezüglich des Gehäusestutzens 4, des Anschlussstutzen 6 sowie der Schnapp-Rast-Verbindung 10.

Der Gehäusestutzen 3 weist einen vorderen, am Stutzenende befindlichen Dichtabschnitt 13 auf, der zylindrisch ist, und an den sich ein Rastabschnitt 14 mit einer Einführschräge 15, der sich im Außendurchmesser gegenüber dem Dichtabschnitt 13 deutlich erweitert, anschließt. Über eine Rastschulter 16 geht der Rastabschnitt 14 in einen vom Außendurchmesser her verjüngten Stutzenbereich über, der sich dann zum Gehäuse hin fortsetzt.

Der Anschlussstutzen 5 seinerseits weist einen Ringraum 17 auf, der an seinem vorderen Ende von einer Rastschulter 18 mit einer Einführschräge 19 axial begrenzt ist, und der am hinteren Ende über eine weitere Schulter 20 axial begrenzt ist. An diesen Ringraum 17 schließt sich ein Aufnahmeraum 21 für das Dichtelement 11 an. Dieser Aufnahmeraum 21, der wie auch der Ringraum 17 zylindrisch ist, ist axial begrenzt, das Dichtelement 11 liegt am Boden 22 des Aufnahmeraums 21 auf.

Das Dichtelement 11 selbst ist zylindrisch ausgeführt, im gezeigten Ausführungsbeispiel weist es eine sich zu seinem freien Ende hin verjüngende Außenkontur auf. Das Dichtelement 11 ist bevorzugt einteilig mit dem Anschlussstutzen 5 verbunden, das heißt, es besteht aus einem anderen, wesentlich weicheren Kunststoffmaterial, um seine Dichteigenschaft und Flexibilität zu erfüllen, es ist aber in einem entsprechenden Herstellungsverfahren fest und unlösbar mit dem Anschlussstutzen 5 verbunden.

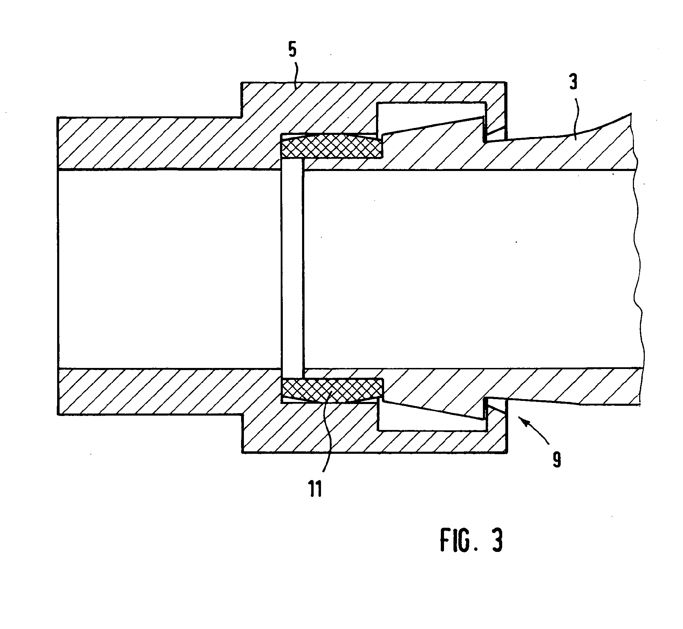

Zur Montage des Anschlussstutzens 5 auf den Gehäusestutzen 3 wird der Anschlussstutzen 5 lediglich auf den Gehäusestutzen 3 kräftig aufgeschoben. Hierbei kommt zunächst die Einführschräge 19 mit der Einführschräge 15 in Kontakt. Bei weiterer axialer Schiebebewegung wird die Rastschulter 18 beziehungsweise die Wand des Ringraums 17 leicht nach außen gedrückt, sie federt also nach außen. Die Aufschiebebewegung erfolgt solange, bis die Rastschulter 18 hinter die Rastschulter 16 schnappt. Der Rastabschnitt 14 ist dann vollständig im Ringraum 17 aufgenommen. Während dieser Aufschiebebewegung greift gleichzeitig der Dichtabschnitt 13 in das Innere des zylindrischen Dichtelements 11 ein. Er liegt vollflächig an der Dichtelementinnenwand an. Im in Fig. 3 gezeigten aufgeschnappten Zustand ist der Anschlussstutzen relativ zum Gehäusestutzen 3 verschwenkbar, wie durch den Doppelpfeil A dargestellt ist, wobei diese Verschwenkbarkeit aufgrund der zylindrischen Ausgestaltung des Ringraums 17 wie des Rastabschnitts 15 beziehungsweise sämtlicher miteinander verbundenen Bauteile in allen Richtungen gegeben ist. Auch ist ersichtlich eine gewisse axiale Bewegbarkeit gegeben, nachdem der Ringraum 17 axial gesehen etwas länger ist als der Dichtabschnitt 14. Diese axiale Bewegbarkeit ist durch den Doppelpfeil B dargestellt. Das Dichtelement 11 ist wie beschrieben radial dichtend mit dem Dichtabschnitt 13 verbunden, es liegt an der Innenseite 23 des Aufnahmeraums 21 an. Wird nun der Aufnahmestutzen 5 leicht verschwenkt, im Bereich von 1° - 2°, so verkippt er relativ zum Dichtabschnitt 13. Hierbei wird das Dichtelement 11 vom verkippten Dichtabschnitt 13 radial nach außen gedrückt, die Dichtung bleibt also radial gesehen an jeder Stelle um den Umfang gewährleistet.

Ferner ist das Dichtelement 11 mit leichter Vorspannung angeordnet, das heißt, auch in der maximalen axialen Auszugsstellung, wenn also der Anschlussstutzen 5 weitestgehend vom Gehäusestutzen 3 heruntergezogen ist (dann schlägt die Rastschulter 18 an die Rastschulter 16 an), liegt die vordere Schulter 24 des Dichtelements 11 immer noch an der Anlageschulter 25 des Gehäusestutzens 3 an. Wird der Anschlussstutzen 5 wieder etwas weiter auf den Gehäusestutzen 3 aufgeschoben, wird das Dichtelement 11 axial gesehen etwas komprimiert. In jedem Fall ist aber bezogen auf jede Axialstellung stets eine Axialdichtung über die Anlage des Dichtelements 11 an der Anlageschulter 25 beziehungsweise die stets gegebene Anlage am Aufnahmeraumboden 22 realisiert.

Fig. 3 zeigt eine Ausgestaltung gemäß Fig. 2, bei der die einzelnen Teile die gleichen sind wie bezüglich Fig. 2 beschrieben. Dort ist lediglich ein etwas anders geformtes Dichtelement 11 vorgesehen, das eine sich, gesehen von seiner axialen Mitte aus, zu beiden Seiten verjüngende Außenkontur aufweist.

## Patentansprüche

1. Messvorrichtung zum Einsetzen in eine Rohrleitung, insbesondere Durchfluss-, Wärme- oder Energiezähler, umfassend ein insbesondere aus Kunststoff bestehendes Gehäuse mit zwei dem Einlass und Auslass des zu vermessenden Mediums dienenden Gehäusestutzen, sowie umfassend an den Gehäusestutzen befestigte oder befestigbare Anschlussstutzen zum Verbinden mit der Rohrleitung, wobei jeder Gehäusestutzen relativ zu dem jeweiligen Anschlussstutzen schwenkbar und axial bewegbar und über wenigstens ein Dichtelement gegeneinander abgedichtet ist, **dadurch gekennzeichnet, dass** ein Gehäusestutzen (3, 4) und der jeweilige Anschlussstutzen (5, 6) über eine Schnapp-Rast-Verbindung (9, 10) unverlierbar miteinander verbunden oder verbindbar sind, wobei das Dichtelement (11) ein den Gehäusestutzen (3, 4) zum Anschlussstutzen (5, 6) axial und radial dichtendes Dichtelement (11) ist, das auch in der maximalen axialen Auszugsstellung des Anschlussstutzens (5, 6) relativ zum Gehäusestutzen (3, 4) vorgespannt ist.

2. Messvorrichtung nach Anspruch 1, **dadurch gekennzeichnet, dass** am Anschlussstutzen (5, 6) oder am Gehäusestutzen (3, 4) ein an einer Seite axial von einer Rastschulter (18) begrenzter Ringraum (17) vorgesehen ist, in den in der Montagestellung ein Rastabschnitt (14) des Gehäusestutzens (3, 4) oder des Anschlussstutzens (5, 6), die Rastschulter (18) hintergreifend, eingeschnappt ist.

3. Messvorrichtung nach Anspruch 2, **dadurch gekennzeichnet, dass** die Rastschulter (18) und der Rastabschnitt (14) jeweils eine Einführschräge (15, 19) aufweisen.

4. Messvorrichtung nach einem der vorangehenden Ansprüche, **dadurch gekennzeichnet, dass** ein Anschlussstutzen (5, 6) den jeweiligen Gehäusestutzen (3, 4) in der Befestigungsstellung übergreift oder in diesen eingreift.

5. Messvorrichtung nach einem der vorangehenden Ansprüche, **dadurch gekennzeichnet, dass** am Anschlussstutzen (5, 6) oder am Gehäusestutzen (3, 4) ein vorzugsweise dem Ringraum (17) direkt folgender Aufnahmeraum (21) für das Dichtelement (11) vorgesehen ist, das sich axial erstreckt und in das zur radialen Abdichtung ein Dichtabschnitt (13) des Gehäusestutzens (3, 4) oder des Anschlussstutzens (5, 6) eingreift und gegen das der Gehäusestutzen (3, 4) und der Anschlussstutzen (5, 6) zur axialen Abdichtung mit einer Anlageschulter (22, 25) axial anliegen.

6. Messvorrichtung nach einem der vorangehenden Ansprüche, **dadurch gekennzeichnet, dass** die Anschlussstutzen (5, 6) aus Kunststoff oder Metall sind.

7. Messvorrichtung nach Anspruch 6, **dadurch gekennzeichnet, dass** bei einem aus Kunststoff bestehenden Anschlussstutzen (5, 6) das ebenfalls aus Kunststoff bestehende Dichtelement (11) angespritzt ist.

8. Messvorrichtung nach einem der Ansprüche 1 bis 6, **dadurch gekennzeichnet, dass** das Dichtelement an dem Gehäusestutzen des aus Kunststoff bestehenden Gehäuses angespritzt ist.

## Claims

1. Measuring device for use in a pipeline, in particular a flowmeter, heat meter or energy meter, comprising a housing which consists, in particular, of plastics material and has two housing ports serving as the inlet and outlet for the medium which is to be measured, and also comprising connecting ports which are, or can be, fastened on the housing ports and are intended for connection to the pipeline, wherein each housing port can be pivoted, and moved axially, relative to the respective connecting port and is sealed via at least one sealing element, **characterized in that** a housing port (3, 4) and the respective connecting port (5, 6) are, or can be, connected to one another in captive fashion via a snap-fit latching connection (9, 10), wherein the sealing element (11) is a sealing element (11) which seals the housing port (3, 4) axially and radially in relation to the connecting port (5, 6) and is prestressed even in the position in which the connecting port (5, 6) has been extended to the maximum axial extent relative to the housing port (3, 4).

2. Measuring device according to Claim 1, **characterized by** the provision, on the connecting port (5, 6) or on the housing port (3, 4), of an annular space (17) which is bounded axially on one side by a latching shoulder (18) and into which, in the installation position, a latching portion (14) of the housing port (3, 4) or of the connecting port (5, 6) is snap-fitted, with engagement behind the latching shoulder (18).

3. Measuring device according to Claim 2, **characterized in that** the latching shoulder (18) and the latching portion (14) each have an introduction slope (15, 19).

4. Measuring device according to one of the preceding claims, **characterized in that** a connecting port (5, 6) engages over, or engages in the respective housing port (3, 4) in the fastening position.

5. Measuring device according to one of the preceding claims, **characterized by** the provision, on the connecting port (5, 6) or on the housing port (3, 4), of an accommodating space (21) which directly follows preferably the annular space (17), is intended for the sealing element (11), extends axially and into which engages, for radial sealing purposes, a sealing portion (13) of the housing port (3, 4) or of the connecting port (5, 6) and against which the housing port (3, 4) and the connecting port (5, 6) butt axially, by way of an abutment shoulder (22, 25), for axial sealing purposes.

6. Measuring device according to one of the preceding claims, **characterized in that** the connecting ports (5, 6) are made of plastics material or metal.

7. Measuring device according to Claim 6, **characterized in that**, in the case of a connecting port (5, 6) consisting of plastics material, the sealing element (11), likewise consisting of plastics material is attached by injection moulding.

8. Measuring device according to one of Claims 1 to 6, **characterized in that** the sealing element is attached by injection moulding to the port of the housing, which consists of plastics material.

## Revendications

1. Dispositif de mesure destiné à être inséré dans une conduite tubulaire, en particulier compteur de débit, de chaleur ou d'énergie, comportant un boîtier en particulier constitué de plastique présentant deux tubulures de boîtier servant à l'entrée et à la sortie du milieu à mesurer, et comportant des tubulures de raccordement fixées ou pouvant être fixées aux tubulures de boîtier en vue de la connexion avec la conduite tubulaire, chaque tubulure de boîtier étant pivotante et axialement mobile et étanchéifiée par le biais d'au moins un élément d'étanchéité par rapport à la tubulure de raccordement respective, **caractérisé en ce qu'**une tubulure de boîtier (3, 4) et la tubulure de raccordement (5, 6) respective sont reliées ou peuvent être reliées l'une à l'autre de manière imperdable par le biais d'une liaison par encliquetage (9, 10), l'élément d'étanchéité (11) étant un élément d'étanchéité (11) réalisant l'étanchéité axialement et radialement de la tubulure de boîtier (3, 4) par rapport à la tubulure de raccordement (5, 6), lequel élément d'étanchéité est précontraint également dans la position de retrait axiale maximale de la tubulure de raccordement (5, 6) par rapport à la tubulure de boîtier (3, 4).

2. Dispositif de mesure selon la revendication 1, **caractérisé en ce qu'**un espace annulaire (17) délimité axialement sur un côté par un épaulement d'encliquetage (18) est prévu sur la tubulure de raccordement (5, 6) ou sur la tubulure de boîtier (3, 4), dans lequel espace annulaire, dans la position de montage, une portion d'encliquetage (14) de la tubulure de boîtier (3, 4) ou de la tubulure de raccordement (5, 6) est encliquetée, en venant en prise par l'arrière avec l'épaulement d'encliquetage (18).

3. Dispositif de mesure selon la revendication 2, **caractérisé en ce que** l'épaulement d'encliquetage (18) et la portion d'encliquetage (14) présentent respectivement un biseau d'insertion (15, 19).

4. Dispositif de mesure selon l'une quelconque des revendications précédentes, **caractérisé en ce qu'**une tubulure de raccordement (5, 6) recouvre la tubulure de boîtier (3, 4) respective dans la position de fixation ou vient en prise dans celle-ci.

5. Dispositif de mesure selon l'une quelconque des revendications précédentes, **caractérisé en ce qu'**un espace de réception (21), suivant de préférence directement l'espace annulaire (17), pour l'élément d'étanchéité (11) est prévu sur la tubulure de raccordement (5, 6) ou sur la tubulure de boîtier (3, 4), lequel élément d'étanchéité s'étend axialement et dans lequel vient en prise, en vue de l'étanchéification radiale, une portion d'étanchéité (13) de la tubulure de boîtier (3, 4) ou de la tubulure de raccordement (5, 6), et contre lequel la tubulure de boîtier (3, 4) et la tubulure de raccordement (5, 6) s'appliquent axialement par un épaulement de butée (22, 25) en vue de l'étanchéification axiale.

6. Dispositif de mesure selon l'une quelconque des revendications précédentes, **caractérisé en ce que** les tubulures de raccordement (5, 6) sont en plastique ou en métal.

7. Dispositif de mesure selon la revendication 6, **caractérisé en ce qu'**en cas de tubulure de raccordement (5, 6) constituée de plastique, l'élément d'étanchéité (11) également constitué de plastique est surmoulé.

8. Dispositif de mesure selon l'une quelconque des revendications 1 à 6, **caractérisé en ce que** l'élément d'étanchéité est surmoulé sur la tubulure de boîtier du boîtier constitué de plastique.
